# EUROPÄISCHE PATENTSCHRIFT

(11) **EP 1 100 666 B1**
(45) Veröffentlichungstag und Bekanntmachung des Hinweises auf die Patenterteilung: **26.03.2003**
(21) Anmeldenummer: 99940048.4
(22) Anmeldetag: 26.07.1999
(51) Int. Cl.: B29C 33/10

(54) **REIFENVULKANISATIONSFORM MIT IN ENTLÜFTUNGSBOHRUNGEN ANGEBRACHTEN SPERRORGANEN**
TYRE VULCANISATION MOULD WITH BLOCKING MECHANISMS FITTED IN DE-AIRING HOLES
MOULE DE VULCANISATION DE PNEUMATIQUES COMPORTANT DES ORGANES DE BLOCAGE PLACES DANS DES ORIFICES DE VENTILATION

(30) Priorität: 27.07.1998 DE 19833730; 11.01.1999 DE 19900596
(43) Veröffentlichungstag der Anmeldung: 23.05.2001
(73) Patentinhaber: Dunlop GmbH, 63450 Hanau (DE)
(72) Erfinder: NITSCH, Boris, D-63755 Alzenau (DE); SERENER-THIELMANN, Tayfun, D-65203 Wiesbaden (DE)
(74) Vertreter: Manitz, Finsterwald & Partner GbR
(86) Internationale Anmeldenummer: EP9905323
(87) Internationale Veröffentlichungsnummer: WO00006358

(56) Entgegenhaltungen:
- US-A- 3 377 662
- US-A- 4 759 701
- US-A- 4 795 331

## Beschreibung

Die Erfindung betrifft eine Vulkanisationsform zur Herstellung technischer Gummiprodukte, insbesondere zur Herstellung von Fahrzeugreifen, mit einer Vielzahl von Entlüftungsbohrungen, in denen jeweils ein das Eindringen von Rohlingsmaterial zumindest im wesentlichen blockierendes Sperrorgan angebracht ist.

Vulkanisationsformen dieser Art sind beispielsweise bekannt aus der US-PS 4 347 212 oder der deutschen Patentschrift 195 43 276 C1.

Zweck der Entlüftungsbohrungen, von denen in einer Vulkanisationsform mehrere tausend vorgesehen sein können, ist es, eine einwandfreie Entlüftung aller Bereiche der mit profilbildenden Stege versehenen Vulkanisationsform zu gewährleisten, um sicherzustellen, daß sich der Reifenrohling beim Aufblähvorgang von innen her exakt an die formgebenden Werkzeuge bzw. Stege der Vulkanisationsform anlegen kann und ein solches exaktes Anlegen an die Form nicht durch Lufteinschlüsse behindert wird.

Ein unerwünschter Nachteil der vorhandenen Entlüftungsbohrungen besteht darin, daß in diese Bohrungen, die üblicherweise einen Durchmesser von 0,7 bis 1,5 mm haben, Kautschuk eindringt und die so gebildeten Austriebe dem fertigen Reifen ein borsten- oder igelartiges Erscheinungsbild verleihen. Zur Beseitigung dieser unerwünschten Austriebe sind zwar verschiedene Techniken bekannt, aber alle diese Techniken verursachen Aufwand und erhebliche Kosten.

Um die unerwünschten Austriebe zu vermeiden, ist es bekannt, in die Entlüftungsbohrungen Ventile einzusetzen, die durch die sich annähernde Rohlingsoberfläche geschlossen und beim Entformen wieder geöffnet werden. Der Nachteil der bisher in Reifenvulkanisationsformen verwendeten Ventile dieser Art besteht vor allem darin, daß sie aufgrund ihrer Mehrteiligkeit aufwendig sind und zur Gewährleistung eines definierten Schließ - und Öffnungsvorgangs eine Schraubenfeder benötigt wird, die bei der Vielzahl der benötigten Ventile möglichst stets die gleiche Charakteristik besitzen muß. Die äußerst geringen Abmessungen dieser Ventile erschweren es, praktisch identische Charakteristiken zu gewährleisten.

Aufgabe der Erfindung ist es, eine entlüftbare Vulkanisationsform mit Sperrorganen zu schaffen, die besonders einfach und damit wirtschaftlich gestaltet sind, problemfrei und schnell montiert und demontiert werden können und eine hohe Funktionssicherheit gewährleisten.

Gelöst wird diese Aufgabe nach der Erfindung im wesentlichen dadurch, daß jedes Sperrorgan einen in der jeweiligen Entlüftungsbohrung kraftschlüssig fixierbaren, insbesondere stiftförmigen Zentralkörper sowie ein mit dem Zentralkörper verbundenes Abdichtteil umfaßt, das einen forminnenseitig und im wesentlichen formbündig gelegenen Plächenbereich aufweist, der mit wenigstens einer Durchbrechung versehen ist und zusammen mit der formseitigen Stirnfläche des Zentralkörpers wenigstens einen im Anschluß an die Durchbrechung vorzugsweise ausgeprägt abgewinkelten Strömungsweg für die Luft bildet.

Durch die spezielle Ausgestaltung des Sperrorgans, das einteilig oder zweiteilig ausgebildet sein kann, gelingt es ohne bewegliche Elemente allein aufgrund der Luftströmungsführung das auf die Sperrorgane treffende Rohlingsmaterial zu stoppen und jegliches störende, zu Austrieben am fertigen Produkt führende Eindringen von Rohlingsmaterial in die ausgebildeten Luftabführungskanäle zu verhindern, was wiederum zur Folge hat, daß beim Öffnen der Form kein Gummimaterial in den speziell ausgebildeten Luftabführungskanälen zurückbleibt und diese verstopfen könnte.

Das Fehlen beweglicher Elemente, wie sie im Falle der Verwendung von Ventilen in Form beweglicher Ventilstößel vorliegen, führt zu einer hohen Funktionssicherheit und vor allem auch dazu, daß beim Reinigen der Formen, das häufig durch Bestrahlen mit Eiskristallen vorgenommen wird, keine Beschädigungen entstehen, die die Sperrorgane funktionsuntüchtig machen würden. Eine weitere vorteilhafte Folge der Ausgestaltung der Sperrorgane nach der Erfindung ist, daß durch die weitgehend beseitigte Gefahr von durch Verschmutzung unwirksam werdenden Sperrorganen die Formreinigungszyklen wesentlich verlängert werden können.

Wenn das Sperrorgan nach der Erfindung zweiteilig ausgebildet wird, erfolgt bevorzugt eine federnde Verrastung des Abdichtteils mit dem Zentralkörper. Dazu sind bevorzugt von den zur Fixierung des Zentralkörpers in den Formbohrungen bestimmten, mit der scheibenförmigen Sperrfläche verbundenen Klemmschenkeln Teilabschnitte in Form von Kuppellaschen nach innen abgekröpft und untergreifen Stützvorsprünge am Zentralkörper, so daß eine Schnapp-Rastverbindung geschaffen wird.

Die gemäß der Erfindung ausgebildeten Sperrorgane sind einfach und schnell positionsgenau in die Bohrungen der jeweiligen Form einzubringen, da dazu lediglich ein Vorgang des Eindrückens dieser Sperrorgane in die Bohrungen erforderlich ist und die Endposition erreicht wird, wenn der Rand der scheibenförmigen Sperrfläche an der Formwand zur Anlage kommt.

Das Sperrorgan nach der Erfindung arbeitet demgemäß nach der oben beschriebenen ersten Ausführungsvariante nach Art einer Düse mit speziell ausgestalteter, die Bildung von Formaustrieben verhindernder Luftführung, für die zum einen die Minimalabmessungen der vorhandenen Luftführungskanäle und zum anderen der abgeknickte Verlauf dieser Luftführungskanäle charakteristisch ist.

Weitere vorteilhafte Ausgestaltungen dieser ersten Ausführungsvariante der Erfindung sind den Unteransprüchen 2 bis 12 zu entnehmen.

Nach einer zweiten Ausführungsvariante ist das Sperrorgan zumindest in dem Sinne beweglich, daß es einen elastisch verformbaren, forminnenseitig gelegenen Flächenbereich aufweist, der mit dem Zentralkörper bei Beaufschlagung durch die Rohlingsoberfläche zumindest im wesentlichen abdichtend zusammenwirkt. Somit bildet nach dieser Ausführungsform das Sperrorgan mit dem Zentralkörper ein zweiteiliges Ventil.

Mit anderen Worten besteht erfindungsgemäß eine zweite Grundlösung der Aufgabe in einer Vulkanisationsform zur Herstellung von Fahrzeugreifen mit einer Vielzahl von Entlüftungsbohrungen, in denen jeweils ein Ventil angebracht und derart ausgebildet ist, daß es durch die sich annähernde Rohlingsoberfläche zumindest im wesentlichen geschlossen und beim Entformen wieder geöffnet wird, mit dem besonderen Kennzeichen, daß jedes Ventil zweiteilig ausgebildet ist und einen in der jeweiligen Entlüftungsbohrung fixierbaren, insbesondere stiftförmigen Zentralkörper sowie ein mit dem Zentralkörper lösbar verbundenes Abdichtteil umfaßt, das zumindest einen elastisch verformbaren, forminnenseitig gelegenen Flächenbereich aufweist, der mit dem Zentralkörper bei Beaufschlagung durch die Rohlingsoberfläche zumindest im wesentlichen abdichtend zusammenwirkt.

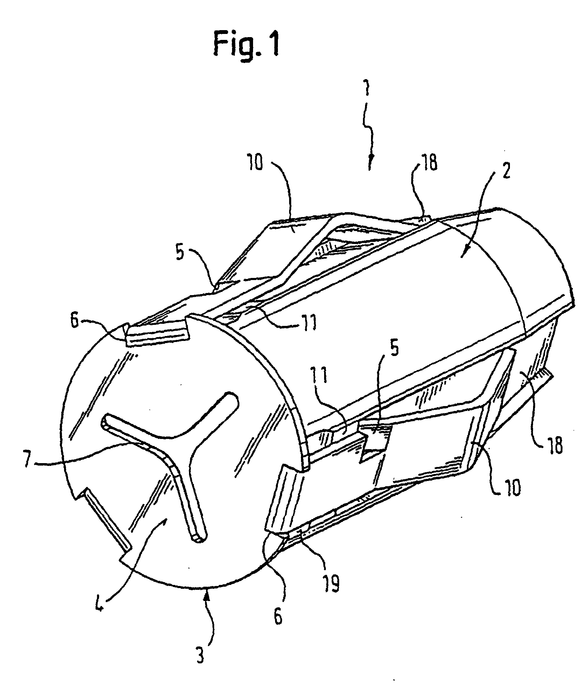

Selbst wenn bei dieser Ausführungsvariante eine Bewegung des forminnenseitig gelegenen Flächenbereichs des Sperrorgans im Sinne einer elastischen Verformung derselben eintritt, um eine vollständige Abdichtung und daher eine Ventilfunktion zu erreichen, ist das Ausmaß der Bewegung verhältnismäßig klein und nicht mit den bisher bekannten Ausführungsformen mit Ventilstößel zu vergleichen. Mit dieser zweiten Ausführungsvariante sind somit beinahe alle Vorteile der erstgenannten Ausführungsvariante zu erreichen, wobei aber die erstgenannte Ausführungsvariante nach den Figuren 1 bis 3 nach Meinung der Anmelderin die beste Ausführungsform darstellt.

Durch die Integration der Federfunktion in eines der beiden Bauteile des Ventils und die damit erreichte Vermeidung der Verwendung einer individuellen Schraubenfeder wird nicht nur eine wesentliche Vereinfachung des Aufbaus der Ventile erreicht, sondern es wird auch die Funktionssicherheit erhöht und die Handhabung erleichtert.

Der Zentralkörper ist im wesentlichen zylindrisch ausgebildet und besitzt einen im Vergleich zum Durchmesser der Entlüftungsbohrung kleineren Durchmesser. Er ist durch Klemmelemente, die entweder am Zentralkörper oder am Abdichtteil vorgesehen sind, unter Ausbildung von Luftdurchtrittskanälen in der jeweiligen Entlüftungsbohrung fixierbar. Je nach Anordnung der Klemmelemente am Zentralkörper oder am Abdichtteil ergeben sich zwei unterschiedliche Ausführungsformen von Entlüftungsventilen, die aber hinsichtlich ihrer Funktion gleichwertig sind, da sie jeweils nur aus zwei Teilen bestehen, ein ausreichend großer Luftdurchlaßquerschnitt vorhanden ist und aufgrund der definierten Federkraft Schließ- und Öffnungsvorgänge in vorgebbarer und sicherer Weise ablaufen.

Erfindungsgemäß ausgebildete Ventile können aus unterschiedlichsten Materialen gefertigt werden, insbesondere aus Federblech, Aluminium- oder Zinkdruckguß, Keramik, Sintermetall sowie aus Spritzgußteilen entsprechend geeigneter Metalle oder entsprechend temperaturbeständiger Kunststoffe.

Besonders vorteilhafte Ausgestaltungen dieser zweiten Ausführungsvariante der Erfindung sind in den Unteransprüchen 14 bis 29 angegeben.

Die Erfindung wird nachfolgend anhand von Ausführungsbeispielen unter Bezugnahme auf die Zeichnung näher erläutert; in der Zeichnung zeigt:
- Fig. 1: eine perspektivische Darstellung einer ersten Ausführungsform eines Sperrorgans nach der Erfindung,
- Fig. 2: eine perspektivische Darstellung des Zentralkörpers des Sperrorgans nach Fig. 1,
- Fig. 3: eine perspektivische Darstellung des Abdichtteils des Sperrorgans nach Fig. 1,
- Fig. 4: eine perspektivische Darstellung einer zweiten Ausführungsform der Erfindung in Form eines Entlüftungsventils,
- Fig. 5: eine perspektivische Darstellung des Zentralkörpers des Ventils nach Fig. 4,
- Fig. 6: eine perspektivische Darstellung des mit dem Zentralkörper kuppelbaren Abdichtteils eines Ventils nach Fig. 4,
- Fig. 7: eine perspektivische Darstellung einer weiteren Ausführungsvariante eines Ventils nach der Erfindung,
- Fig. 8: eine perspektivische Darstellung des Zentralkörpers des Ventils nach Fig. 7, und
- Fig. 9: eine perspektivische Darstellung des mit dem Zentralkörper kuppelbaren Abdichtteils des Ventils nach Fig. 7.

In der perspektivischen Darstellung nach Fig. 1 ist mit dem allgemeinen Bezugszeichen 1 das in eine Entlüftungsbohrung einer Vulkanisationsform einsetzbare Sperrorgan bezeichnet, und dieses Sperrorgan besteht gemäß dieser Ausführungsform der Erfindung aus einem Zentralkörper 2 und einem mit diesem verrastbaren Abdichtteil 3.

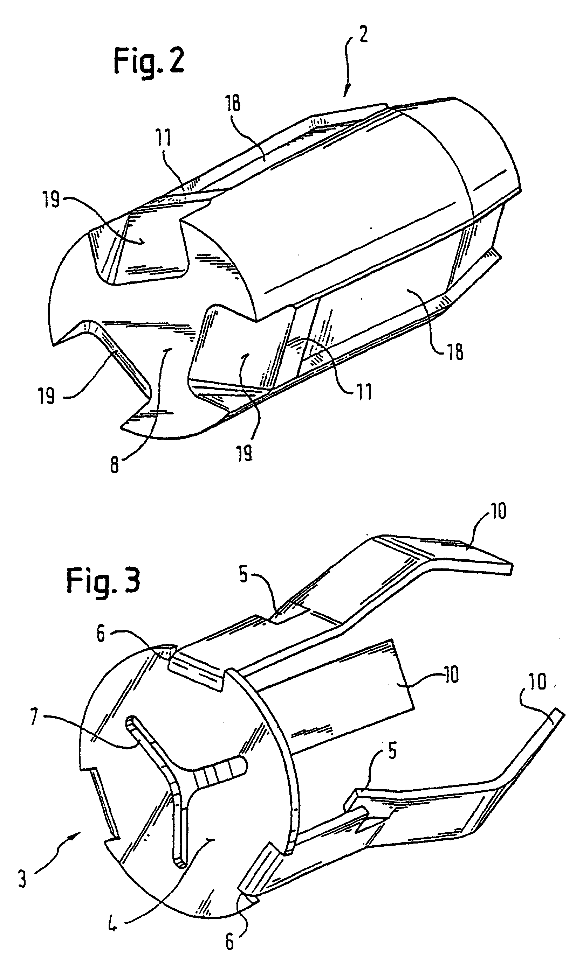

Nach Fig. 2 ist der Zentralkörper 2, der bevorzugt aus einem Spritzgußteil besteht, in der Form eines zylindrischen Stiftes ausgebildet und ist über seinen Umfang gleichmäßig verteilt mit Führungsrinnen 18 zur Aufnahme von Klemmschenkeln 10 des Abdichtteils 3 versehen. Durch das Zusammenwirken zwischen den Führungsrinnen 18 und den Klemmschenkeln 10 wird auch eine Verdrehsicherung für das Abdichtteil 3 geschaffen.

Diese Fuhrungsrinnen 18 sind im rückwärtigen Bereich des Zentralkörpers 2 nach innen abgeschrägt, und im formenseitigen Endbereich des Zentralkörpers 2 sind in den Rinnen 18 Stützvorsprünge 11 ausgebildet, die zur Verrastung des Abdichtteils 3 dienen. Zur formseitig gelegenen Stirnseite 8 hin sind die Führungsrinnen 18 radial nach innen geführt, so daß Schrägflächen 19 entstehen.

Fig. 3 zeigt das Abdichtteil 3, das bevorzugt aus dünnem Federstahl besteht und von einem eine Sperrfläche bildenden Kreisflächenbereich 4 gebildet wird, an den drei gleichmäßig über den Umfang verteilt angeordnete Klemmschenkel 10 angeformt sind.

Die Sperrfläche 4 ist mit einer mittig gelegenen Y-förmigen Schlitzdurchbrechung 7 versehen. Die Abwinkelung der Klemmschenkel 10 von der Sperrfläche 4 erfolgt über kurze Radialeinschnitte 6, so daß die sperrflächenseitigen Bereiche der Klemmschenkel 10 radial etwas innerhalb des Außenumfangs der Sperrfläche 4 gelegen sind. Durch diese Einschnitte und Abwinkelungen der Klemmschenkel 10 entstehen auch sehr enge Schlitze, über die eine gewisse Luftabführung erfolgen kann, wobei diese sich ergebenden Schlitze so schmal sind, daß kein Eindringen von Rohlingsmaterial erfolgt.

Die Klemmschenkel 10 sind mit Knickstellen versehen, so daß Schenkelteile radial über den Außenumfang des kreisförmigen Abdichtteils 3 überstehen und damit die Klemmschenkel die erforderliche Fixierungsfunktion im in die Bohrungen eingesetzten Zustand übernehmen können.

Von jedem Klemmschenkel 10 ist ein Teilbereich in Form einer Kuppellasche 5 nach innen abgekröpft, und diese Kuppellasche 5 dient zur Schnapp-Verrastung mit dem Zentralkörper 2.

Die Fig. 1 zeigt den zusammengesetzten Zustand von Zentralkörper 2 und Abdichtteil 3, wobei die Klemmschenkel 10 in die Führungsrinnen 18 eingreifen und die Kuppellaschen 5 die Stützvorsprünge verrastend hintergreifen. Wird das so gebildete Sperrorgan in eine Formbohrung eingedrückt, dann strecken sich die geknickt ausgebildeten Bereiche der Klemmschenkel 12, wodurch zum einen die Haltekräfte für das Sperrorgan in der jeweiligen Bohrung erzeugt werden und zum anderen über die Kuppellaschen 5 die Sperrfläche 4 gegen die Stirnfläche 8 des Zentralkörpers 2 gespannt wird.

Gelangt im praktischen Betrieb einer Vulkanisationsform, die mit einer großen Anzahl derartiger Sperrorgane ausgestattet ist, das Rohlingsmaterial, d.h. das Kautschukmaterial gegen die Sperrorgane 1, dann kann die in den entsprechenden Teilbereichen der Form noch vorhandene Luft über den Durchbruch 7 bzw. über die sehr geringe Abmessungen besitzenden Einschnitte bzw. Spalte 6 entweichen, während das Kautschukmaterial bestenfalls noch in die Durchbrechung 7 gelangen, jedoch nicht mehr in den Minimal-Spaltraum zwischen Sperrfläche 4 und Stirnfläche 8 eindringen kann. Da die Dicke des Abdichtteils 3 nur einen Bruchteil eines Millimeters beträgt, entstehen durch ein Eindringen von Rohlingsmaterial in die Durchbrechung 7 bestenfalls in der Praxis kaum sichtbare Minimalmarken, die in keiner Weise störend sind.

Aufgrund der geringen Dicke der Sperrfläche 4 können sich zwischen den Wandungen der Durchbrechungen 7 und dem Rohlingsmaterial auch keine Haftkräfte ausbilden, die ein Abreißen von Gummimaterial beim Öffnen der Form und damit ein Verstopfen der Durchbrechungen bewirken könnten. Dies ist ein wesentlicher Grund dafür, daß mit erfindungsgemäßen Sperrorganen eine einwandfreie Langzeitfunktion gewährleistet werden kann.

Die Sperrorgane nach der Erfindung lassen sich praktisch vollautomatisch fertigen, wobei das Abdichtteil 3 aus einem Stanz-Biegeteil und der Zentralkörper 2 aus einem Form- bzw. Spritzgußteil bestehen kann. Auch das Zusammenfügen beider Teile läßt sich aufgrund der einfachen Schnapp-Rastverbindung automatisieren.

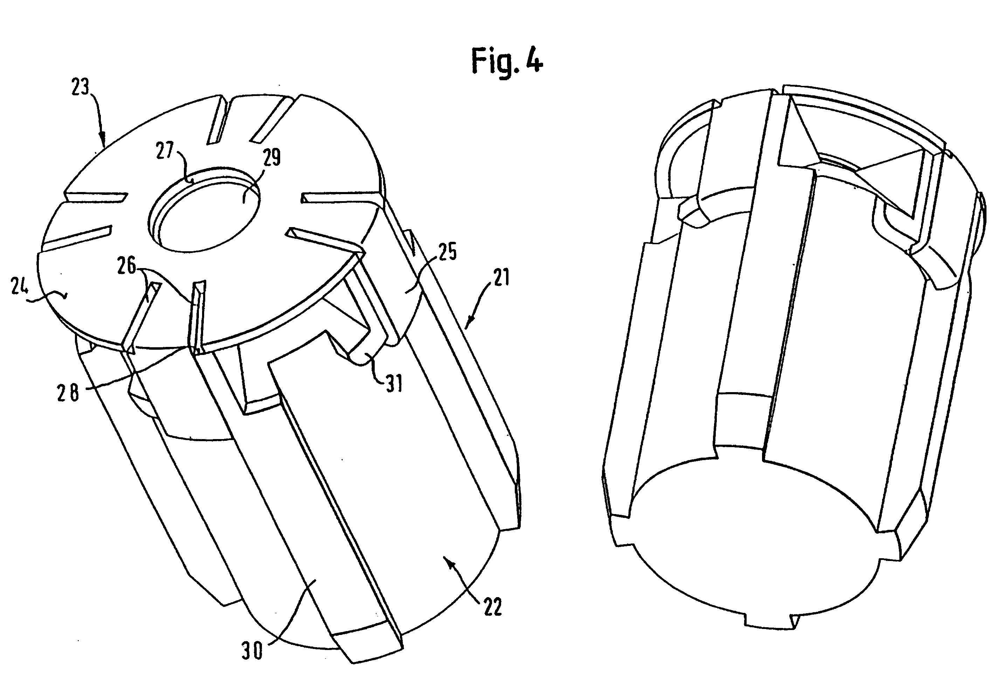

Die zweite Ausführungsvariante der Erfindung wird nunmehr anhand der zwei Ausführungsformen nach den Figuren 4 bis 9 beschrieben.

In der perspektivischen Darstellung nach Fig. 4 ist mit dem allgemeinen Bezugszeichen 21 das in eine Entlüftungsbohrung einer Vulkanisationsform einsetzbare Ventil bezeichnet, und dieses Ventil 21 besteht aus einem Zentralkörper 22 und einem mit diesem kuppelbaren Abdichtteil 23.

Der Zentralkörper 22 ist im wesentlichen zylindrisch ausgebildet und weist über seinen Umfang verteilt mehrere leistenförmige Klemmelemente 30 auf, die nach dem Einsetzen des Ventils in eine Entlüftungsbohrung an der Bohrungsinnenwand klemmend anliegen und zwischen sich Luftdurchtrittskanäle festlegen.

Im oberen, d.h. dem abdichtteilseitigen Bereich des Zentralkörpers sind Stützvorsprünge 31 angeformt, die eine Ankopplung des Abdichtteils 23 ermöglichen.

Das Abdichtteil 23 ist in Form einer flexiblen Dichtscheibe ausgebildet, deren Fläche 24 im Betrieb durch die sich annähernde Rohlingsoberfläche elastisch in Richtung des Zentralkörpers verformbar ist.

Die Dichtscheibe 23 liegt mit ihrem Außenumfang an entsprechenden Stützflächen 28 des Zentralkörpers auf, und sie ist mittig mit einer im dargestellten Ausführungsbeispiel kreisförmigen Ausnehmung 27 versehen, welche die Haupt-Luftdurchtrittsöffnung bildet. Dieser Ausnehmung 27 gegenüberliegend und komplementär geformt ist am Zentralkörper 22 ein scheibenförmiges Ansatzteil 29 vorgesehen, das bei Auslenkung der Dichtfläche 24 in die Ausnehmung 27 eintritt und damit die Hauptluftdurchtrittsöffnung praktisch verschließt.

Mit der Dichtscheibe 24 verbunden, jedoch bewegungsmäßig durch Schlitzpaare 26 entkoppelt, sind mehrere über den Umfang verteilte Kuppelschenkel 25 vorgesehen, die nach Art eines Bajonettverschlusses mit den am Zentralkörper 22 vorhandenen Stützvorsprüngen 28 kuppelbar sind.

Diese Kupplungsart zwischen Zentralkörper 22 und Abdichtteil 23 stellt nur eine mögliche Kupplungsart dar, aber sie hat den Vorteil, daß mittels eines geeigneten Werkzeugs auch eine einfache und schnelle Trennung der beiden Teile möglich ist. Beispielsweise kann dazu ein magnetisches Schraubwerkzeug Verwendung finden.

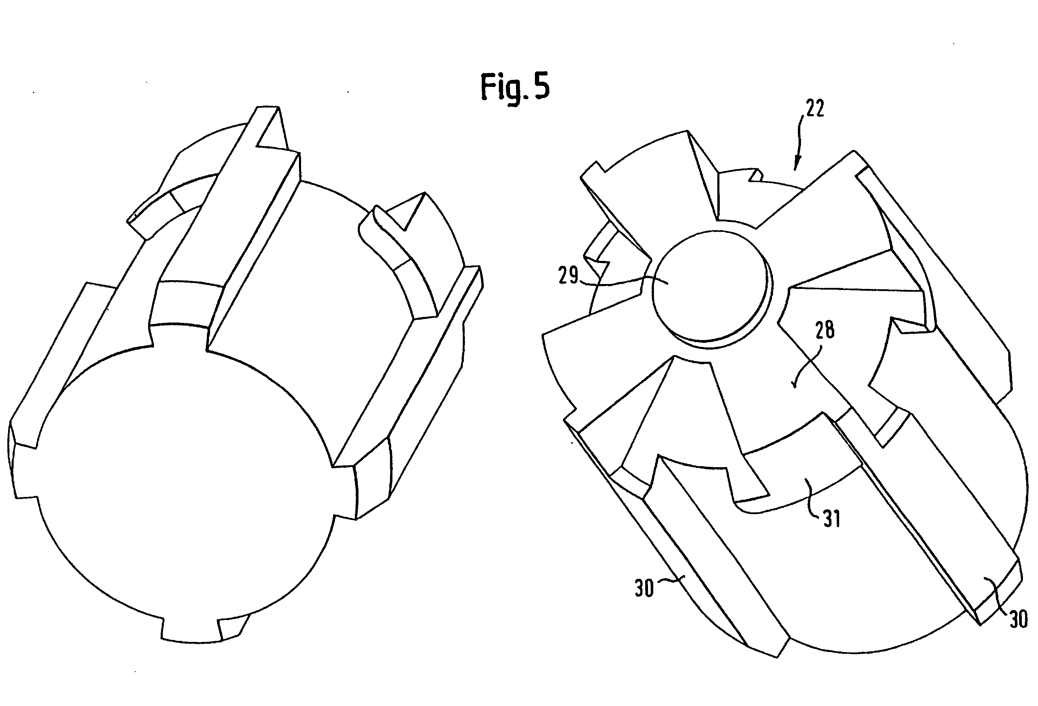

Fig. 5 zeigt die Ausgestaltung des Zentralkörpers 22 mit dem stirnseitig mittig vorgesehenen Ansatzteil 29, das mit der Ausnehmung 27 im Abdichtteil 23 zusammenwirkt. Die stirnseitige Stützfläche 28 verläuft ausgehend von ihrem Umfangsbereich zum Ansatzteil 29 hin abfallend, so daß die elastische Dichtfläche 24 die erforderliche Schließ- und Öffnungsbewegung durchführen kann.

Die radiale Höhe der Klemmelemente 30 sowie der Stützvorsprünge 28 ist so gewählt, daß erstere die erforderliche Klemmwirkung in den Entlüftungsbohrungen entfalten können und letztere die über eine Drehbewegung erfolgende Verbindung mit den Kuppelschenkeln 25 auch bei in die Entlüftungsbohrung eingesetztem Zentralkörper 22 ermöglichen.

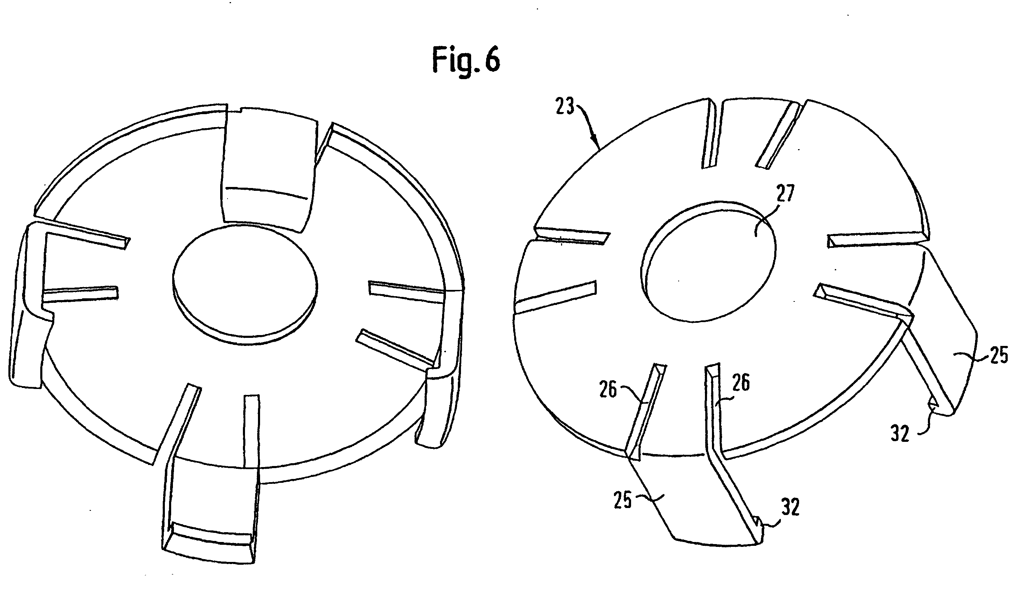

Fig. 6 zeigt nochmals im Detail die Ausgestaltung des Abdichtteils 23 bzw. der Dichtscheibe mit der zentralen Ausnehmung 27 und den Einschnittpaaren 26 und den Kuppelschenkeln 25, die an ihren freien Enden Abwinkelungen 32 aufweisen, welche die Stützvorsprünge 31 am Zentralkörper 22 im gekuppelten Zustand untergreifen.

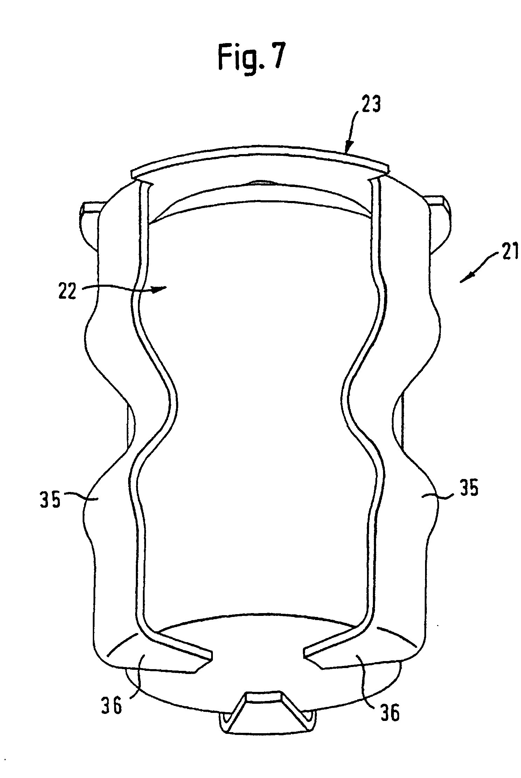

Fig. 7 zeigt eine modifizierte Ausführungsform des zweiteiligen Ventils 21, wobei sich diese Ausführungsform vor allem durch eine weitere konstruktive Vereinfachung auszeichnet.

Das Ventil 21 nach dieser Ausführungsform umfaßt wiederum einen in diesem Falle als zylindrischer Stift ausgebildeten Zentralkörper 22 sowie ein mit dem Zentralkörper 22 zusammenwirkendes Abdichtteil 23, das mit mehreren und insbesondere drei über den Umfang verteilt einteilig angeformten gewellten Federschenkeln 35 versehen ist, welche an ihrem freien Ende 36 nach innen abgewinkelt sind und damit einen Aufnahmeraum zur Halterung des Zentralkörpers 22 festlegen.

Im Gegensatz zu der Ausführungsform nach den Fig. 4 bis 6 muß bei dieser Ausgestaltung der stiftförmige Zentralkörper 22 nicht mehr in die Entlüftungsbohrung der Vulkanisationsform eingepreßt werden, sondern er wird einfach durch die gewellt ausgebildeten Federschenkel 35 gehalten. Diese Wellen auf den Schenkeln 35 verformen sich in der Bohrung beim Einpressen und drücken auf den Zentralkörper 22. Auf diese Weise wird dieser Zentralkörper 22 axial in der gewünschten Position gehalten, wobei die Verformungsspannung der Schenkel dafür sorgt, daß die elastische Dichtscheibe 23 exakt positioniert gehalten wird und auch der Zentralkörper nicht herausgedrückt werden kann, wobei die umgebogenen freien Enden 36 zusätzlich ein Herausgleiten des stiftförmigen Zentralkörpers 22 aus dem von den gewellten Federn 35 gebildeten Aufnahmeraum verhindern. Diese Art der Halterung ist auch deshalb von Vorteil, weil damit zwangsläufig Wachstumsunterschiede in der Bohrung und im Zentralkörper bei erhöhten Temperaturen durch die über die gewellten Federn 35 erzeugte Preßspannung ausgeglichen werden.

Der Außendurchmesser der Dichtscheibe 23 ist größer als der Bohrungsdurchmesser, so daß die Dichtscheibe 23 mit ihrem Außenumfangsrand am Bohrungsrand aufliegt und sich ausgehend von dieser Auflagefläche in Axialrichtung des Ventils 21 elastisch verformen kann. Außerdem wird durch diesen Anschlag des Abdichtteils 23 am jeweiligen Bohrungsrand die Ventilposition eindeutig definiert und das Einsetzen erleichtert.

Die Form des eine Dichtfläche bildenden Abdichtteils 23 kann flach, jedoch auch kalottenförmig sein, und zwar bis zu einem Kalottenwinkel von etwa 20°.

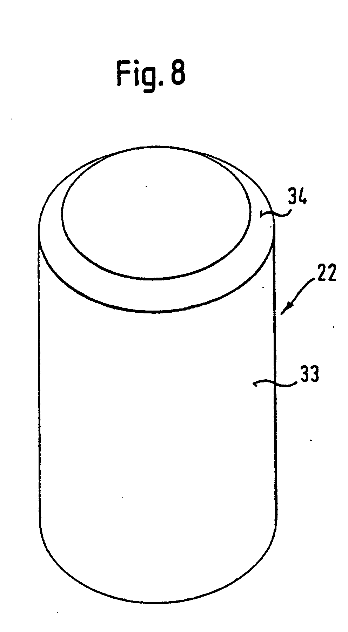

Fig. 8 zeigt den Zentralkörper für das Ventil nach Fig. 7. Dieser Zentralkörper 22 ist an seiner Umfangsfläche 33 glattwandig ausgebildet und an der mit dem Abdichtteil 23 zusammenwirkenden Stirnfläche an seinem Außenumfang mit einer Abschrägung 34 versehen.

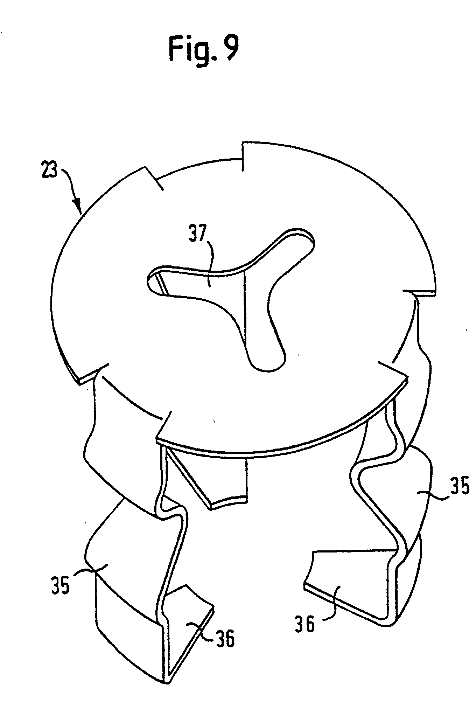

Fig. 9 zeigt in einer perspektivischen Draufsicht das Abdeck- bzw. Abdichtteil 23 des Ventils nach Fig. 7 und läßt erkennen, daß in diesem Falle als Haupt-Luftdurchtrittsöffnung eine Y-förmige oder allgemein sternförmige Ausnehmung 37 etwa mittig angeordnet ist. Diese Ausgestaltung ist jedoch nicht zwingend, sie gewährleistet jedoch im Zusammenspiel mit dem Zentralkörper 22 nach Fig. 8 eine einwandfreie Funktion.

## Patentansprüche

1. Vulkanisationsform zur Herstellung technischer Gummiprodukte, insbesondere zur Herstellung von Fahrzeugreifen, mit einer Vielzahl von Entlüftungsbohrungen, in denen jeweils ein das Eindringen von Rohlingsmaterial zumindest im wesentlichen blockierendes Sperrorgan angebracht ist,
**dadurch gekennzeichnet,**
**daß** jedes Sperrorgan (1) einen in der jeweiligen Entlüftungsbohrung kraftschlüssig fixierbaren, insbesondere stiftförmigen Zentralkörper (2, 22) sowie ein mit dem Zentralkörper (2, 22) verbundenes Abdichtteil (3, 23) umfaßt, das einen forminnenseitig und im wesentlichen formbündig gelegenen Flächenbereich (4) aufweist, der mit wenigstens einer Durchbrechung (7, 27) versehen ist und zusammen mit der formseitigen Stirnfläche des Zentralkörpers (2, 22) wenigstens einen im Anschluß an die Durchbrechung (7, 27) vorgesehenen Strömungsweg für die Luft bildet.

2. Vulkanisationsform nach Anspruch 1,
**dadurch gekennzeichnet,**
**daß** der Strömungsweg im Anschluß an die Durchbrechung (7, 27) ausgeprägt abgewinkelt ist.

3. Vulkanisationsform nach Anspruch 1,
**dadurch gekennzeichnet,**
**daß** der Luft-Strömungsweg im Anschluß an die Durchbrechung (7, 27) um etwa 90° abgewinkelt ist und sich zwischen der Bohrungswandung und dem Zentralkörper (2, 22) fortsetzt.

4. Vulkanisationsform nach einem der vorhergehenden Ansprüche,
**dadurch gekennzeichnet,**
**daß** die Durchbrechung (7, 27) in dem eine Sperrfläche bildenden Flächenbereich (4, 24) mittig angeordnet, als Rundloch und/oder schlitzförmig, insbesondere in Form eines Y-Schlitzes ausgebildet ist.

5. Vulkanisationsform nach einem der vorhergehenden Ansprüche,
**dadurch gekennzeichnet,**
**daß** das Sperrorgan zweiteilig ausgebildet und das Abdichtteil (3, 23) verrastbar mit dem Zentralkörper (2, 22) verbunden ist.

6. Vulkanisationsform nach einem der vorhergehenden Ansprüche,
**dadurch gekennzeichnet,**
**daß** der Zentralkörper (2, 22) im wesentlichen zylindrisch ausgebildet ist und einen im Vergleich zum Durchmesser der Entlüftungsbohrung kleineren Durchmesser aufweist, und daß der Zentralkörper (2, 22) durch insbesondere aus Federschenkeln bestehende Klemmelemente (10, 35), die am Zentralkörper (2, 22) oder am Abdichtteil (3, 23) vorgesehen sind, unter Ausbildung von Luftdurchtrittskanälen in der jeweiligen Entlüftungsbohrung fixierbar ist.

7. Vulkanisationsform nach einem der vorhergehenden Ansprüche,
**dadurch gekennzeichnet,**
**daß** das Abdichtteil (3, 23) eine im wesentlichen scheiben- oder kalottenförmige, schlitzförmige Durchbrechungen (7, 27) aufweisende Sperrfläche (4, 24) für Rohlingsmaterial sowie mehrere über den Umfang verteilt angeordnete Kuppellaschen (5, 25) zur Verrastung mit dem Zentralkörper (2, 22) umfaßt.

8. Vulkanisationsform nach einem der vorhergehenden Ansprüche,
**dadurch gekennzeichnet,**
**daß** die scheibenförmige Sperrfläche (4, 24) randseitig eine Mehrzahl von Radialeinschnitten (6, 26) aufweist, daß jeweils ein Paar der Radialeinschnitte (6, 26) einen Klemmschenkel (10, 25) begrenzt, der bezüglich der Sperrfläche (4, 24) rechtwinklig abgebogen ist und in eine Führungsrinne (18) im Zentralkörper (2, 22) eingreift.

9. Vulkanisationsform nach Anspruch 8,
**dadurch gekennzeichnet,**
**daß** die Kuppellaschen (5, 25) von nach innen abgekröpften Abschnitten der Klemmschenkel (10, 25) gebildet sind und Stützvorsprünge (11, 13) am Zentralkörper (2, 22) untergreifen.

10. Vulkanisationsform nach einem oder mehreren der vorhergehenden Ansprüche,
**dadurch gekennzeichnet,**
**daß** der Durchmesser des stiftförmigen Zentralkörpers (2, 22) etwa zwischen 1 mm und 10 mm liegt und insbesondere etwa 0,01 mm bis 2 mm kleiner als der Bohrungsdurchmesser ist.

11. Vulkanisationsform nach einem oder mehreren der vorhergehenden Ansprüche,
**dadurch gekennzeichnet,**
**daß** das Abdichtteil (3, 23) aus einem Federblech mit einer Dicke im Bereich von etwa 0,05 mm bis 0,3 mm besteht.

12. Vulkanisationsform nach einem oder mehreren der vorhergehenden Ansprüche,
**dadurch gekennzeichnet,**
**daß** der Zentralkörper (2, 22) aus einem Spritzgußteil besteht.

13. Sperrorgan nach einem oder mehreren der vorhergehenden Ansprüche zur Verwendung in mit Entlüftungsbohrungen versehenen Vulkanisationsformen.

14. Vulkanisationsform nach Anspruch 1,
**dadurch gekennzeichnet,**
**daß** das Sperrorgan mit dem Zentralkörper (22) ein zweiteiliges Ventil (21) dadurch bildet, daß das Sperrorgan einen elastisch verformbaren, forminnenseitig gelegenen Flächenbereich aufweist, der mit dem Zentralkörper (22) bei Beaufschlagung durch die Rohlingsoberfläche zumindest im wesentlichen abdichtend zusammenwirkt.

15. Vulkanisationsform nach Anspruch 14,
**dadurch gekennzeichnet,**
**daß** der Zentralkörper (22) im wesentlichen zylindrisch ausgebildet ist und einen im Vergleich zum Durchmesser der Entlüftungsbohrung kleineren Durchmesser aufweist, und daß der Zentralkörper (22) durch Klemmelemente (30), die am Zentralkörper (22) oder am Abdichtteil (23) vorgesehen sind, unter Ausbildung von Luftdurchtrittskanälen in der jeweiligen Entlüftungsbohrung fixierbar ist.

16. Vulkanisationsform nach Anspruch 14 oder 15,
**dadurch gekennzeichnet,**
**daß** das Abdichtteil (23) eine im wesentlichen scheiben- oder kalottenförmige, Einschnitte (26) und/oder Ausnehmungen (27) aufweisende Dichtfläche sowie mehrere über den Umfang verteilt angeordnete Kuppelschenkel (25) zur Verbindung mit dem Zentralkörper (22) umfaßt.

17. Vulkanisationsform nach Anspruch 16,
**dadurch gekennzeichnet,**
**daß** die scheiben- oder kalottenförmige Dichtfläche (24) auf dem Zentralkörper (22) insbesondere randseitig abgestützt und bei elastischer Verformung in Richtung des Zentralkörpers (22) unter zumindest weitestgehendem Verschluß von Luftdurchtrittsöffnungen am Zentralkörper (22) zur Anlage kommt.

18. Vulkanisationsform nach einem der vorhergehenden Ansprüche 14 bis 17,
**dadurch gekennzeichnet,**
**daß** im Mittenbereich der elastischen Dichtfläche (24) eine Haupt-Luftdurchtrittsöffnung (27) ausgebildet ist.

19. Vulkanisationsform nach Anspruch 18,
**dadurch gekennzeichnet,**
**daß** bei geschlossenem Ventil in die Haupt-Luftdurchtrittsöffnung (27) ein komplementär geformtes Ansatzteil (29) des zylindrischen Zentralkörpers (22) eingreift.

20. Vulkanisationsform nach einem der vorhergehenden Ansprüche 14 bis 19,
**dadurch gekennzeichnet,**
**daß** die scheibenförmige, elastische Dichtfläche (24) eine Mehrzahl von Radialeinschnitten (26) aufweist, daß jeweils ein Paar der Radialeinschnitte (26) einen Kuppelschenkel (25) begrenzt, welcher einen parallel zur Umfangsfläche des Zentralkörpers (22) verlaufenden Abschnitt und ein sich daran anschließendes abgewinkeltes freies Ende (32) aufweist, wobei diese Kuppelschenkel (25) nach Art eines Bajonettverschlusses mit Stützvorsprüngen (31) am Zentralkörper (22) zusammenwirken.

21. Vulkanisationsform nach Anspruch 15,
**dadurch gekennzeichnet,**
**daß** die Klemmelemente (30) aus sich zumindest im wesentlichen über die axiale Länge des Zentralkörpers (22) erstreckenden, leistenförmigen Ansätzen bestehen.

22. Vulkanisationsform nach einem oder mehreren der Ansprüche 14 bis 20,
**dadurch gekennzeichnet,**
**daß** der Zentralkörper (22) eine ansatzfreie Umfangsfläche (33) aufweist und die Klemmelemente aus gewellten Federschenkeln (35) bestehen, die einteilig mit der elastischen Dichtscheibe (23) ausgebildet und vorzugsweise an ihren freien Enden (36) zur Schaffung eines Aufhahmeraums für den Zentralkörper (22) nach innen abgewinkelt sind.

23. Vulkanisationsform nach Anspruch 22,
**dadurch gekennzeichnet,**
**daß** der Durchmesser der Dichtscheibe (23) größer als der Durchmesser der Entlüftungsbohrung ist.

24. Vulkanisationsform nach Anspruch 23,
**dadurch gekennzeichnet,**
**daß** der zylindrische Zentralkörper (22) dichtscheibenseitig an seinem Außenumfang eine Abschrägung (34) aufweist und die Dichtscheibe (23) mittig eine sternförmige oder runde Ausnehmung (37) besitzt.

25. Vulkanisationsform nach einem oder mehreren der vorhergehenden Ansprüche 14 bis 24,
**dadurch gekennzeichnet,**
**daß** der Ventildurchmesser im Bereich von etwa 2 bis 12 mm liegt und der Durchmesser des stiftförmigen Zentralkörpers (22) etwa zwischen 0,01 und 2 mm, insbesondere etwa 0,7 mm kleiner als der Bohrungsdurchmesser ist.

26. Vulkanisationsform nach einem oder mehreren der vorhergehenden Ansprüche 14 bis 25,
**dadurch gekennzeichnet,**
**daß** das Dichtflächenteil bzw. die Dichtscheibe (23) aus einem Federblech mit einer Dicke im Bereich von etwa 0,05 bis 0,3 mm besteht.

27. Vulkanisationsform nach einem oder mehreren der vorhergehenden Ansprüche 14 bis 26,
**dadurch gekennzeichnet,**
**daß** die Dichtfläche (24) des Abdichtteils (23) im wesentlichen flach oder kalottenförmig ausgebildet ist.

28. Vulkanisationsform nach Anspruch 27,
**dadurch gekennzeichnet,**
**daß** bei kalottenförmiger Ausbildung der Dichtfläche (24) der Kalottenwinkel etwa 20° beträgt.

29. Vulkanisationsform nach einem der vorhergehenden Ansprüche 14 bis 28,
**dadurch gekennzeichnet,**
**daß** die forminnenseitige Stirnfläche des Zentralkörpers (22) eine flache zumindest im wesentlichen konusförmige Vertiefung aufweist.

30. Vulkanisationsform zur Herstellung von Fahrzeugreifen mit einer Vielzahl von Entlüftungsbohrungen, in denen jeweils ein Ventil angebracht und derart ausgebildet ist, daß es durch die sich annähernde Rohlingsoberfläche zumindest im wesentlichen geschlossen und beim Entformen wieder geöffnet wird,
**dadurch gekennzeichnet,**
**daß** jedes Ventil (21) zweiteilig ausgebildet ist und einen in der jeweiligen Entlüftungsbohrung unter Ausbildung von Entlüftungskanälen fixierbaren, insbesondere stiftförmigen Zentralkörper (22) sowie ein mit dem Zentralkörper (22) lösbar verbundenes Abdichtteil (23) umfaßt, das zumindest einen elastisch verformbaren, forminnenseitig gelegenen Flächenbereich (24) aufweist, der wenigstens eine Durchbrechung (27) aufweist und mit dem Zentralkörper (22) bei Beaufschlagung durch die Rohlingsoberfläche zumindest im wesentlichen abdichtend zusammenwirkt.

## Claims

1. Vulcanisation mould for the manufacture of technical rubber products, in particular for the manufacture of vehicle tyres, comprising a plurality of venting bores, in each of which there is provided a blocking member, which at least substantially blocks the penetration of blank material, **characterised in that** each blocking member (1) includes a central body (2, 22), in particular a pin-like central body (2, 22), which can be fixed in the respective venting bore in a force-transmitting manner, and also a sealing part (3, 23) connected to the central body (2, 22) and having a surface region (4) at the inner side of the mould and substantially flush with it, which is provided with at least one aperture (7, 27) and forms, together with the mould side end face of the central body (2, 22), at least one flow path for the air following the aperture (7, 27).

2. Vulcanisation mould in accordance with claim 1, **characterised in that** the flow path is pronouncedly angled following the aperture (7, 27).

3. Vulcanisation mould in accordance with claim 1, **characterised in that** the air flow path is angled by approximately 90°, following the aperture (7.27) and continues between the bore wall and the central body (2,22).

4. Vulcanisation mould in accordance with any one of the preceding claims, **characterised in that** the aperture (7, 27) is centrally arranged in the surface region (4, 24) forming a blocking surface, and is formed as a round bore or is of slot-like design, in particular in the form of a Y-slot.

5. Vulcanisation mould in accordance with any one of the preceding claims, **characterised in that** the blocking member is of two-part design, and **in that** the sealing part (3, 23) is latchably connected to the central body (2, 22).

6. Vulcanisation mould in accordance with any one of the preceding claims, **characterised in that** the central body (2, 22) is of substantially cylindrical shape and has a smaller diameter in comparison to the diameter of the venting bore, and **in that** the central body (2, 22) can be fixed in the respective venting bore by clamping elements (10, 35), which in particular consist of spring limbs, and which are provided on the central body (2, 22) or on the sealing part (3, 23) while forming air passages.

7. Vulcanisation mould in accordance with any one of the preceding claims, **characterised in that** the sealing part (3, 23) has a substantially disc-like or spherical blocking surface (4, 24) for blank material and having slot-like apertures (7, 27), the sealing part also including a plurality of coupling lugs (5, 25) arranged distributed around the periphery for the latching to the central body (2, 22).

8. Vulcanisation mould in accordance with any one of the preceding claims, **characterised in that** the disc-like blocking surface (4, 24) has a plurality of radial cuts (6, 26) at the edge, **in that** in each case a pair of radial cuts (6, 26) bound each clamping limb (10, 25), which is bent at right angles with respect to the blocking surface (4, 24) and engages in a guide channel (18) in the central body (2, 22).

9. Vulcanisation mould in accordance with claim 8, **characterised in that** the coupling lugs (5, 25) are formed by inwardly cranked sections of the clamping limbs (10, 25) and engage behind support projections (11, 13) at the central body (2, 22).

10. Vulcanisation mould in accordance with one or more of the preceding claims, **characterised in that** the diameter of the pin-like central body (2, 22) lies approximately between 1 mm and 10 mm, and in particular is approximately 0.01 mm to 2 mm smaller than the bore diameter.

11. Vulcanisation mould in accordance with one or more of the preceding claims, **characterised in that** the sealing part (3, 23) consists of a sheet metal spring with a thickness in the range from about 0.05 mm to 0.3 mm.

12. Vulcanisation mould in accordance with one or more of the preceding claims, **characterised in that** the central body (2, 22) consists of an injection-moulded part.

13. Blocking member in accordance with one or more of the preceding claims for use in vulcanisation moulds provided with vent bores.

14. Vulcanisation mould in accordance with claim 1, **characterised in that** the blocking member with the central body (2, 22) forms a two-part valve (21); **in that** the blocking member has an elastically deformable surface region disposed at the inside of the mould which cooperates in an at least substantially sealing manner with the central body (22) on being loaded by the surface of the blank.

15. Vulcanisation mould in accordance with claim 14, **characterised in that** the central body (22) is of substantially cylindrical shape and has a diameter which is smaller in comparison to the diameter of the venting bore; and **in that** the central body (22) can be fixed by clamping elements (30), which are provided on the central body (22) or on the sealing part (23), in the respective venting bore, while forming air passages.

16. Vulcanisation mould in accordance with claim 14 or claim 15, **characterised in that** the sealing part (23) has a substantially disk-like or spherical sealing surface having cut-outs (26) and/or recesses (27) and also a plurality of coupling limbs (25) distributed around the periphery for the connection to the central body (22).

17. Vulcanisation mould in accordance with claim 16, **characterised in that** the disk-like or spherical sealing surface (24) is supported on the central body (22), in particular at the rim, and, on elastic deformation in the direction of the central body (22), comes into contact against the central body (22) with at least substantial closure of the air passage openings.

18. Vulcanisation mould in accordance with one of the preceding claims 14 to 17, **characterised in that** a main air passage opening (27) is formed in the central region of the elastic sealing surface (24).

19. Vulcanisation mould in accordance with claim 18, **characterised in that**, with the valve closed, a complementarily shaped formation (29) of the cylindrical central body (22) engages into the main air passage opening (27).

20. Vulcanisation mould in accordance with any one of the preceding claims 14 to 19, **characterised in that** the disk-like elastic sealing surface (24) has a plurality of radial cuts (26); **in that** in each case a pair of radial cuts (26) bounds a coupling limb (25) which has a portion extending parallel to the peripheral surface of the central body (22) and an angled free end (32) adjoining it, with this coupling limb (25) cooperating with support projections (31) on the central body (22) in the manner of a bayonet connection.

21. Vulcanisation mould in accordance with claim 15, **characterised in that** the clamping elements (30) consist of strip-like formations, which extend at least substantially over the axial length of the central body (22).

22. Vulcanisation mould in accordance with one or more of the claims 14 to 20, **characterised in that** the central body (22) has a formation free peripheral surface (33) and the clamping elements consist of corrugated spring limbs (35), which are formed in one piece with the elastic sealing disc (23) and which are preferably inwardly angled at their free ends (36) to provide a receiving space for the central body (22).

23. Vulcanisation mould in accordance with claim 22, **characterised in that** the diameter of the sealing disc (23) is greater than the diameter of the venting bore.

24. Vulcanisation mould in accordance with claim 23, **characterised in that** the cylindrical central body (22) has a chamfer (34) at its outer periphery at its sealing disc side, and the sealing disc (23) has a star-like or round cutout (17) at the centre.

25. Vulcanisation mould in accordance with one or more of the preceding claims 14 to 24, **characterised in that** the valve diameter lies in the range from about 2 to 12 mm, and the diameter of the pin-like central body (22) is approximately between 0.1 and 2 mm, and in particular approximately 0.7 mm smaller than the bore diameter.

26. Vulcanisation mould in accordance with one or more of the preceding claims 14 to 25, **characterised in that** the sealing surface portion or the sealing disc (23) consists of a spring metal sheet, with a thickness in the range from approximately 0.05 to 0.3 mm.

27. Vulcanisation mould in accordance with one or more of the preceding claims 14 to 26, **characterised in that** the sealing surface (24) of the sealing part (23) is substantially flat or spherically shaped.

28. Vulcanisation mould in accordance with claim 27, **characterised in that**, with a spherical shape of the sealing surface (24), the angle of the spherical surface amounts to approximately 20°.

29. Vulcanisation mould in accordance with any one of the preceding claims 14 to 28, **characterised in that** the front surface of the central body (22) at the inner side of the mould has a shallow, at least substantially conical recess.

30. Vulcanisation mould for the manufacture of vehicle tyres having a plurality of venting bores, in each of which a valve is mounted and designed such that it is at least substantially closed by the approaching surface of the blank and is opened again on demoulding, **characterised in that** each valve (21) is of two-part design and includes a central body (22), in particular a pin-like central body (22), which can be fixed in the respective venting bore while forming venting channels, and also a sealing part (23), which is releasably connected to the central body (22) and which has at least one elastically deformable surface region (24) disposed at the inner side of the mould, which has at least one aperture (27) and which cooperates in an at least substantially sealing manner with the central body (22) on being loaded by the surface of the blank.

## Revendications

1. Moule de vulcanisation pour la fabrication de produits techniques en caoutchouc, notamment pour la fabrication de pneumatiques de véhicules, comportant une multiplicité de perçages de désaération, dans chacun desquels est disposé un organe de blocage, qui bloque au moins pour l'essentiel la pénétration de la matière de l'ébauche, **caractérisé en ce**
**que** chaque organe de blocage (20) comprend un corps central (2, 22), notamment en forme de tige, qui peut être fixé selon une liaison de force dans le perçage de désaération respectif, ainsi qu'une partie d'étanchéité (3, 23), qui est reliée au corps central (2, 22) et qui comporte un élément de surface (4), qui est situé sur le côté intérieur du moule et est disposé de manière à être essentiellement de niveau avec le moule et qui comporte au moins un passage (7, 27) et forme avec la surface frontale, située du côté du moule, du corps central (2, 22) au moins une voie de circulation pour l'air, qui est prévue à la suite du passage (7, 27).

2. Moule de vulcanisation selon la revendication 1, **caractérisé en ce que** la voie de circulation est coudée de façon marquée à la suite du passage (7, 27).

3. Moule de vulcanisation selon la revendication 1, **caractérisé en ce que** la voie de circulation d'air est coudée à environ 90° à la suite du passage (7, 27) et se prolonge entre la paroi du passage et le corps central (2, 22).

4. Moule de vulcanisation selon l'une des revendications précédentes, **caractérisé en ce que** le passage (7, 27) est disposé au centre de l'élément de surface (4, 24), qui forme la surface de blocage, et est agencé sous la forme d'un trou circulaire et/ou sous la forme d'une fente, notamment sous la forme d'une fente en Y.

5. Moule de vulcanisation selon l'une des revendications précédentes, **caractérisé en ce que** l'organe de blocage est formé de deux éléments et la partie d'étanchéité (3, 23) est reliée de manière à pouvoir être encliquetée au corps central (2, 22).

6. Moule de vulcanisation selon l'une des revendications précédentes, **caractérisé en ce que** le corps central (2, 22) est agencé avec une forme essentiellement cylindrique et possède un diamètre supérieur au diamètre du perçage de désaération, et que le corps central (2, 22) peut être fixé moyennant la formation de passages de traversée pour l'air, dans le perçage de désaération respectif à l'aide notamment d'éléments de serrage (10, 35), qui sont constitués notamment par des branches de ressort et qui sont prévues sur le corps central (2, 22) ou sur la partie d'étanchéité (3, 23).

7. Moule de vulcanisation selon l'une des revendications précédentes, **caractérisé en ce que** la partie d'étanchéité (3, 23) comporte une surface de blocage (4, 24) essentiellement en forme de disque ou en forme de calotte, qui comporte des passages en forme de fentes (7, 27), pour la matière de l'ébauche, ainsi que plusieurs pattes de couplage (5, 25) réparties sur la périphérie et destinées à réaliser l'encliquetage avec le corps central (2, 22).

8. Moule de vulcanisation selon l'une des revendications précédentes, **caractérisé en ce que** la surface de blocage en forme de disque (4, 24) comporte sur son bord une multiplicité d'encoches radiales (6, 26), que respectivement une paire des encoches radiales (6, 26) délimite une branche de serrage (10, 25) qui est coudée à angle droit par rapport à la surface de blocage (4, 24) et s'engage dans une rainure de guidage (18) formée dans le corps central (2, 22).

9. Moule de vulcanisation selon la revendication 8, **caractérisé en ce que** les pattes de couplage (5, 25) sont formées par des sections, coudées vers l'intérieur, des branches de serrage (10, 25) et s'engage au-dessous de parties saillantes d'appui (11, 13) sur le corps central (2, 22).

10. Moule de vulcanisation selon une ou plusieurs des revendications précédentes, **caractérisé en ce que** le diamètre du corps central en forme de tige (2, 22) est compris approximativement entre 1 mm et 10 mm et notamment est inférieur d'environ 0,01 mm à 2 mm, au diamètre du perçage.

11. Moule de vulcanisation selon l'une des revendications précédentes, **caractérisé en ce que** la partie d'étanchéité (3, 23) est formée d'une tôle pour ressorts ayant une épaisseur dans la gamme comprise entre environ 0,05 mm et 0,3 mm.

12. Moule de vulcanisation selon l'une des revendications précédentes, **caractérisé en ce que** le corps central (2, 22) est formé par une pièce moulée par injection.

13. Organe de blocage selon une ou plusieurs des revendications précédentes, pour son utilisation dans des moules de vulcanisation équipés de perçages de désaération.

14. Moule de vulcanisation selon la revendication 1, **caractérisé en ce que** l'organe de blocage forme avec le corps central (22), une soupape (21) constituée de deux éléments par le fait que l'organe de blocage possède un élément de surface déformable élastiquement, qui est disposé sur le côté intérieur du moule et qui coopère au moins pour l'essentiel de façon étanche avec le corps central (22), lorsqu'elle est chargée par la surface de l'ébauche.

15. Moule de vulcanisation selon la revendication 14, **caractérisé en ce que** le corps central (22) est réalisé avec une forme essentiellement cylindrique et possède un diamètre qui est inférieur au diamètre du perçage de désaération, et que le trou central (22) peut être fixé par des éléments de serrage (30), qui sont prévus sur le corps central (22) ou sur la partie d'étanchéité (23), moyennant la réalisation de canaux de passage de l'air dans le perçage de désaération respectif.

16. Moule de vulcanisation selon la revendication 14 ou 15, **caractérisé en ce que** la partie d'étanchéité (23) comprend une surface d'étanchéité essentiellement en forme de disque ou de calotte, qui possède des encoches (26) et/ou des évidements (27), ainsi que plusieurs branches de couplage (25) qui sont réparties sur la périphérie et sont destinées à établir la liaison avec le corps central (22).

17. Moule de vulcanisation selon la revendication 16, **caractérisé en ce que** la surface d'étanchéité en forme de disque ou de calotte (24) prend appui notamment au niveau du bord sur le corps central (22) et, dans le cas d'une déformation élastique en direction du corps central (22), vient s'appliquer sur le corps central (22) moyennant la fermeture, au moins dans une très large mesure, d'ouvertures de passage de l'air.

18. Moule de vulcanisation selon l'une des revendications précédentes 14 à 17, **caractérisé en ce qu'**une ouverture principale de passage de l'air (27) est formée dans la zone centrale de la surface d'étanchéité élastique (24).

19. Moule de vulcanisation selon la revendication 18, **caractérisé en ce que** dans le cas où la soupape est fermée, un appendice saillant (29) de forme complémentaire du corps central cylindrique (22) s'engage dans l'ouverture principale (27) de passage de l'air.

20. Moule de vulcanisation selon l'une des revendications précédentes 14 à 19, **caractérisé en ce que** la surface d'étanchéité élastique en forme de disque (24) comporte une multiplicité d'encoches radiales (26), que respectivement une paire des encoches radiales (26) délimite une branche de couplage (25), qui possède une section, qui s'étend parallèlement à la surface circonférentielle du corps central (22), et une extrémité libre et coudée (32), qui se raccorde à cette section, cette branche de couplage (25) coopérant à la manière d'un système de fermeture à baïonnette avec des appendices saillants d'appui (31) sur le corps central (22).

21. Moule de vulcanisation selon la revendication 15, **caractérisé en ce que** les éléments de serrage (30) sont constitués par des appendices saillants en forme de barrettes qui s'étendent au moins essentiellement sur la longueur axiale du corps central (22).

22. Moule de vulcanisation selon une ou plusieurs des revendications 14 à 20, **caractérisé en ce que** le corps central (22) comprend une surface circonférentielle (33) sans appendice saillant et que les éléments de serrage sont formés par des branches ondulées de ressorts (35), qui sont formées d'un seul tenant avec le disque d'étanchéité élastique (23) et sont coudées vers l'intérieur de préférence au niveau de leurs extrémités libres (36), pour créer un espace de logement pour le corps central (22).

23. Moule de vulcanisation selon la revendication 22, **caractérisé en ce que** le diamètre du disque d'étanchéité (23) est supérieur au diamètre du perçage de désaération.

24. Moule de vulcanisation selon la revendication 23, **caractérisé en ce que** le corps central cylindrique (22) comporte, du côté du disque d'étanchéité, sur sa périphérie extérieure, un biseau (34) et que le dispositif d'étanchéité (23) possède en son centre un évidement en forme d'étoile ou circulaire (37).

25. Moule de vulcanisation selon l'une des revendications précédentes 14 à 24, **caractérisé en ce que** le diamètre de la soupape se situe dans une gamme comprise entre environ 2 et 12 mm et que le diamètre du corps central en forme de tige (22) est inférieur approximativement d'une valeur comprise entre 0,01 et 2 mm et notamment égale à environ 0,7 mm, au diamètre du perçage.

26. Moule de vulcanisation selon l'une des revendications précédentes 14 à 25, **caractérisé en ce que** l'élément de surface d'étanchéité ou le disque d'étanchéité (23) est constitué par une tôle pour ressorts ayant une épaisseur située dans la gamme comprise entre environ 0,05 et 0,3 mm.

27. Moule de vulcanisation selon l'une des revendications précédentes 14 à 26, **caractérisé en ce que** la surface d'étanchéité (24) de la partie d'étanchéité (23) est essentiellement plate ou en forme de calotte.

28. Moule de vulcanisation selon la revendication 27, **caractérisé en ce que** dans le cas de l'agencement de la surface d'étanchéité (24) en forme de calotte, l'angle de calotte est égal à environ 20°.

29. Moule de vulcanisation selon l'une des revendications précédentes 14 à 28, **caractérisé en ce que** la surface frontale, sur le côté intérieur du moule, du corps central (22) possède un renfoncement plat, au moins essentiellement de forme conique.

30. Moule de vulcanisation pour fabriquer des pneumatiques de véhicules, comportant une multiplicité de perçages de désaération, dans chacun desquels est montée une soupape, qui est agencée de telle sorte qu'elle est fermée au moins pour l'essentiel par la surface de l'ébauche, qui se rapproche, et est ouverte à nouveau lors du démoulage, **caractérisé en ce que** chaque soupape (21) est constituée de deux éléments et comporte un corps central notamment en forme de disque (22) pouvant être fixé dans le perçage de désaération respectif moyennant la formation de canaux de désaération, ainsi qu'une partie d'étanchéité (23) reliée de façon amovible au corps central (22) et qui comporte au moins un élément de surface (24) déformable élastiquement et disposé sur le côté intérieur du moule et qui comporte au moins un passage (27) et coopère avec le corps central (22) au moins d'une manière essentiellement étanche, lorsqu'il est chargé par la surface de l'ébauche.
